# EUROPÄISCHE PATENTSCHRIFT

(11) **EP 1 654 901 B1**
(45) Veröffentlichungstag und Bekanntmachung des Hinweises auf die Patenterteilung: **28.11.2007**
(21) Anmeldenummer: 04766215.0
(22) Anmeldetag: 14.07.2004
(51) Int. Cl.: H04Q 7/38

(54) **Verfahren und Vorrichtungen zur Auswahl eines gemeinsam genutzten Übertragungskanals für eine Teilnehmerstation eines Funkkommunikationssystems**
Method and apparatus for selecting a shared transmission channel for a subscriber station of a radio communication system
Procédé et dispositifs pour sélectionner un canal de transmission d'utilisation commune, destiné à une station d'abonné d'un système de radiocommunication

(30) Priorität: 11.08.2003 DE 10336859
(43) Veröffentlichungstag der Anmeldung: 10.05.2006
(73) Patentinhaber: SIEMENS AKTIENGESELLSCHAFT, 80333 München (DE)
(72) Erfinder: SCHNIEDENHARN, Jörg, 53225 Bonn (DE); KROTH, Norbert, 14482 Potsdam (DE)
(86) Internationale Anmeldenummer: PCT/EP2004/051485
(87) Internationale Veröffentlichungsnummer: WO 2005/018261

(56) Entgegenhaltungen:
- WO-A-02/076134
- US-B1- 6 571 101
- "Universal Mobile Telecommunications System (UMTS); Radio Resource Control (RRC) protocol specification (3GPP TS 25.331 version 3.14.0 Release 1999)" ETSI STANDARDS, EUROPEAN TELECOMMUNICATIONS STANDARDS INSTITUTE, SOPHIA-ANTIPOLIS, FR, [Online] Juni 2003 (2003-06), XP002321442 Gefunden im Internet: URL:http://webapp.etsi.org/exchangefolder/ ts_125331v031400p.pdf> [gefunden am 2005-03-16]

## Beschreibung

Die Erfindung betrifft ein Verfahren zur Auswahl eines gemeinsam genutzten Übertragungskanals für eine Teilnehmerstation eines Funkkommunikationssystems, sowie eine entsprechende Teilnehmerstation, eine entsprechende sendende Station und ein entsprechendes Computerprogramm.

Funkkommunikationssysteme, beispielsweise nach dem GSM- (Global System for Mobile Communications) Standard oder dem UMTS-(Universal Mobile Telecommunications System) Standard, verwenden je nach Art der übertragenen Daten, beispielsweise Nutzdaten oder Signalisierungsdaten, verschiedene Arten von Übertragungskanälen die sich durch ihre Eigenschaften unterscheiden. Welche Art von Übertragungskanälen verwendet werden soll, ist üblicherweise je nach Art der Daten vom Netzwerk festgelegt. Im Fall gemeinsam genutzter Übertragungskanäle, so genannter common channels, deren Nutzung sich mehrere Teilnehmerstationen teilen, findet die Auswahl eines Übertragungskanals jedoch auch in den Teilnehmerstationen des Funkkommunikationssystems anhand von bestimmten Regeln statt. Solche Regeln existieren beispielsweise für Funkkommunikationssysteme gemäß dem UMTS-Standard und werden in gleicher Weise auch vom Netzwerk angewandt, um sicherzustellen, dass sowohl Teilnehmerstation als auch Netzwerk den gleichen Übertragungskanal auswählen.

Für die Auswahl eines sogenannten Secondary Common Control Physical Channel (SCCPCH) ist in der technischen Spezifikation TS25.331v050400, Kapitel 8.5.19, der 3GPP (3rd Generation Partnership Project) eine Regel festgelegt. Über die Systeminformation werden einer Teilnehmerstation alle SCCPCH-Übertragungskanäle mitgeteilt, die zur Verfügung stehen. Die Teilnehmerstation wählt aus der Menge der SCCPCH-Übertragungskanäle einen Kanal in Abhängigkeit von einer Teilnehmerkennung (UTRAN-RNTI: Universal Terrestrial Radio Access Network - Radio Network Temporary Identifier) der Teilnehmerstation aus. Die Teilnehmerkennung ist dem Funkkommunikationssystem bekannt. Das Funkkommunikationssystem wählt daher mittels des gleichen Auswahlverfahrens den gleichen SCCPCH-Kanal aus wie die Teilnehmerstation.

Auch in zukünftigen Funkkommunikationssystemen mit einer voraussichtlich viel größeren Anzahl von gemeinsam genutzten Übertragungskanälen und möglicherweise sogar unterschiedlichen Arten von gemeinsam genutzten Übertragungskanälen müssen Regeln festgelegt werden, die Teilnehmerstationen und Netzwerk eine Auswahl eines Übertragungskanals ermöglichen. Gleichzeitig muss sichergestellt sein, dass auch Teilnehmerstationen die für ein älteres Funkkommunikationssystem konzipiert worden sind, in den neueren Funkkommunikationssystemen betrieben werden können. Dies bedeutet insbesondere, dass alte Teilnehmerstationen in neuen Funkkommunikationssystemen in der Lage sein müssen, gemeinsam genutzte Übertragungskanäle auszuwählen.

Die Erfindung hat daher die Aufgabe, ein Verfahren zur Auswahl eines gemeinsam genutzten Übertragungskanals für eine Teilnehmerstation eines Funkkommunikationssystems sowie eine Teilnehmerstation, eine sendende Station und ein Computerprogramm anzugeben, mit denen der Teilnehmerstation ermöglicht wird, einen für sie in dem Funkkommunikationssystem geeigneten gemeinsam genutzten Übertragungskanal auszuwählen.

Diese Aufgabe wird mit dem Verfahren der Teilnehmerstation, der sendenden Station sowie dem Computerprogramm gemäß den unabhängigen Ansprüchen gelöst.

Vorteilhafte Weiterbildungen der Erfindung sind Gegenstand der abhängigen Ansprüche.

Bei dem erfindungsgemäßen Verfahren zur Auswahl eines gemeinsam genutzten Übertragungskanals für eine Teilnehmerstation eines Funkkommunikationssystems stehen im Funkkommunikationssystem zur Übertragung von mindestens einer bestimmten Art von Daten gemeinsam genutzte Übertragungskanäle aus mehreren Übertragungskanalklassen zur Verfügung. Die Teilnehmerstation empfängt eine Information von einer sendenden Station, die angibt, welche der Übertragungskanalklassen für die Übertragung der bestimmten Art von Daten zur Auswahl gestellt werden und die Teilnehmerstation wählt aus den gemeinsam genutzten Übertragungskanälen der zur Auswahl gestellten Übertragungskanalklassen einen Übertragungskanal aus.

Je nachdem, welche bestimmte Art von Daten von der Teilnehmerstation empfangen werden soll, können unterschiedliche Übertragungskanalklassen durch die Information angeboten werden. Erfordert die bestimmte Art von Daten eine hohe Datenrate, so gibt die Information eine oder mehrere Übertragungskanalklassen an, die eine hohe Datenrate ermöglichen. Die Teilnehmerstation kann durch die Erfindung immer einen Übertragungskanal aus einer Übertragungskanalklasse auswählen, die besonders gut zur Übertragung der bestimmten Art von Daten geeignet ist.

In einer Weiterbildung der Erfindung wird vorteilhafter Weise der Übertragungskanal bei Empfang einer ersten Information aus einer ersten Übertragungskanalklasse und bei Empfang einer zweiten Information aus einer zweiten Übertragungskanalklasse ausgewählt. Bei Empfang einer dritten Information wird der Übertragungskanal aus einer Menge von Übertragungskanälen ausgewählt, die durch Übertragungskanäle der ersten und der zweiten Übertragungskanalklasse gebildet wird.

Sind alle Übertragungskanäle der zweiten Übertragungskanalklasse bereits verwendet, so kann die Auswahl durch die erste Informationen auf die erste Übertragungskanalklasse eingeschränkt werden. In gleicher Weise kann durch die zweite Information die Auswahl auf die zweite Übertragungskanalklasse eingeschränkt werden, falls bereits alle Übertragungskanäle der ersten Übertragungskanalklasse belegt sind. Dies ist von Vorteil, wenn zwar eine Übertragungskanalklasse für die Übertragung der bestimmten Art von Daten bevorzugt wird, eine Übertragung aber auch in einer anderen Übertragungskanalklasse erfolgen kann. Insbesondere können durch die erste und zweite Information auch Teilnehmerstationen gezielt Übertragungskanäle einer bestimmten Übertragungskanalklasse für den Empfang der bestimmten Art von Daten zugewiesen werden. Die Teilnehmerstationen können somit in Teilnehmerstationsklassen eingeteilt werden. Die dritte Information ermöglicht beispielsweise bei einer großen Anzahl von Teilnehmerstationen möglichst viele Übertragungskanäle bereitzustellen und, z. B. mittels des Auswahlverfahren aus Kapitel 8.5.19 der technischen Dokumentation TS25.331v050400, eine Gleichverteilung der Teilnehmerstationen über alle Übertragungskanäle zu erreichen. Weiterhin können so Teilnehmerstationen, d. h. eine Teilnehmerstationsklasse, festgelegt werden, für die beide Übertragungskanalklassen zur Auswahl gestellt werden.

Zweckmäßig ist, wenn die Information ausschließlich Übertragungskanalklassen angibt, die die Teilnehmerstation aufgrund ihrer technischen Ausgestaltung verwenden kann. In neu entwickelten Funkkommunikationssystemen können auf diese Weise auch Teilnehmerstationen älterer Bauart betrieben werden, indem ihnen ausschließlich Übertragungskanalklassen angegeben werden, für deren Empfang sie bereits in älteren Funkkommunikationssystemen ausgelegt waren.

Vorteilhafter Weise wird die Information über einen dedizierten Übertragungskanal oder einen Rundsendekanal (Broadcast-Kanal) empfangen.

Um zu ermöglichen, dass lediglich eine Teilmenge der Übertragungskanäle einer Übertragungskanalklasse zur Auswahl gestellt wird, ist es sinnvoll, wenn eine weitere Information über einen dedizierten Übertragungskanal oder einen Rundsendekanal empfangen wird, die angibt, welche Übertragungskanäle in der jeweiligen Übertragungskanalklasse zur Auswahl gestellt werden.

Sind mehrere Teilnehmerstationen für den Empfang der bestimmten Art von Daten vorgesehen, so können Übertragungsressourcen eingespart werden, wenn die Teilnehmerstation den Übertragungskanal anhand einer für eine Gruppe von Teilnehmerstationen spezifischen Gruppenkennung auswählt. Broadcast- und/oder Multicast-Dienste (MBMS: Multimedia Broadcast Multicast) werden von mehreren Teilnehmerstationen empfangen und lassen sich über einen einzigen Übertragungskanal übertragen. Die Gruppenkennung ermöglicht, beispielsweise durch äquivalente Anwendung des Auswahlverfahrens aus Kapitel 8.5.19 der technischen Dokumentation TS25.331, dass mehrere Teilnehmerstationen den gleichen Übertragungskanal auswählen, um dort z. B. einen MBMS-Dienst zu empfangen.

Ist alternativ ein individueller Empfang der bestimmten Art von Daten durch die Teilnehmerstation vorgesehen, so wählt die Teilnehmerstation den Übertragungskanal vorteilhafter Weise anhand einer für die Teilnehmerstation spezifischen Teilnehmerkennung aus. Die Teilnehmerkennung ist beispielsweise eine IMSI (International Mobile Subscriber Identity), IMEI (International Mobile Equipment Identity) oder UTRAN-RNTI.

Günstig ist es, wenn sich die Übertragungskanalklassen durch eine Kanaleigenschaft der ihnen zugeordneten Übertragungskanäle unterscheiden. Unterschieden werden kann hier beispielsweise, wenn als Kanaleigenschaft eine Datenrate und/oder eine Übertragungsqualität verwendet wird.

Die erfindungsgemäße Teilnehmerstation, die erfindungsgemäße sendende Station sowie das erfindungsgemäße Computerprogramm weisen alle Merkmale auf, die zur Durchführung des erfindungsgemäßen Verfahrens benötigt werden.

Die Erfindung wird im Folgenden anhand von in den Figuren dargestellten Ausführungsbeispielen näher erläutert. Es zeigen:
- Fig. 1: ein erstes Ausführungsbeispiel eines erfindungsgemäßen Verfahrens zur Auswahl eines gemeinsam genutzten Übertragungskanals und
- Fig. 2: ein zweites Ausführungsbeispiel eines erfindungsgemäßen Verfahrens zur Auswahl eines gemeinsam genutzten Übertragungskanals.

Gleiche Bezugszeichen in den Figuren bezeichnen gleiche Gegenstände.

Eine Teilnehmerstation ist im Folgenden jede Station, die Signale empfangen und senden kann. Eine Teilnehmerstation ist beispielsweise ein Mobiltelefon oder auch eine ortsbewegliche oder ortsfeste Vorrichtung zur Übertragung von Bild- und/oder Tondaten, zum Fax-, Short Message Service SMS- und Email-Versand und zum Internetzugang. Es handelt sich mithin um eine allgemeine Sende- und/oder Empfangseinheit des Funkkommunikationssystems.

Eine sendende Station ist im Folgenden eine netzseitige Einrichtung eines Funkkommunikationssystems, die zur Übertragung und zum Empfang von Signalisierungsdaten und Nutzdaten an bzw. von Teilnehmerstationen ausgebildet ist. Eine sendende Station ist beispielsweise eine Basisstation eines Funkkommunikationssystems. Ohne darauf beschränkt zu sein, wird daher nachfolgend eine sendende Station als Basisstation bezeichnet.

Die Erfindung kann vorteilhaft in beliebigen Funkkommunikationssystemen verwendet werden. Unter Funkkommunikationssystemen sind Systeme zu verstehen, in denen eine Datenübertragung zwischen Stationen über eine Funkschnittstelle erfolgen kann. Die Datenübertragung kann sowohl bidirektional als auch unidirektional erfolgen. Funkkommunikationssysteme sind insbesondere beliebige Mobilfunksysteme beispielsweise nach dem GSM- oder dem UMTS-Standard. Auch zukünftige Mobilfunksysteme, beispielsweise der vierten Generation, sollen unter Funkkommunikationssystem verstanden werden.

Im Folgenden wird die Erfindung am Beispiel eines Mobilfunksystems nach dem UMTS-Standard beschrieben, ohne jedoch darauf beschränkt zu sein.

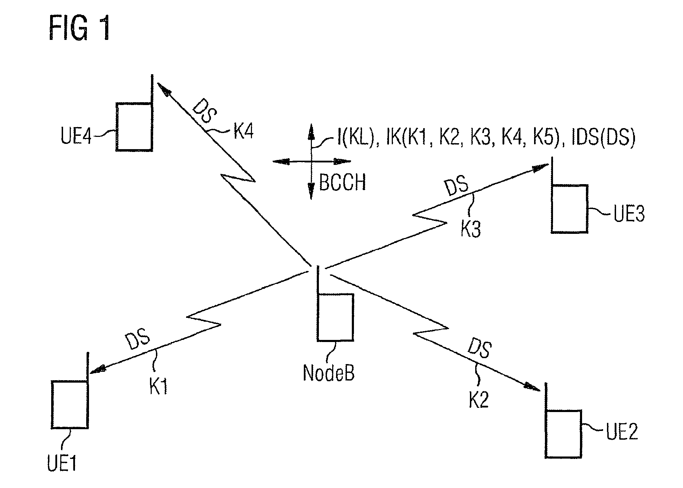

In Figur 1 ist schematisch ein erfindungsgemäßes Funkkommunikationssystem dargestellt, in dem eine Basisstation NodeB auf einem Rundsendekanal BCCH Informationen aussendet, die von Teilnehmerstationen in einem Funkversorgungsbereich, d. h. in einer Funkzelle der Basisstation NodeB, empfangen werden können. In der nicht dargestellten Funkzelle der Basisstation NodeB befinden sich vier Teilnehmerstationen UE1, UE2, UE3, UE4, die die von der Basisstation NodeB ausgesendeten Informationen empfangen. In dem Funkkommunikationssystem werden zur Übertragung von Daten neben dedizierten Übertragungskanälen auch gemeinsam genutzte Übertragungskanäle verschiedener Übertragungskanalklassen bereitgestellt.

Die Basisstation NodeB sendet auf dem Rundsendekanal BCCH eine Information IDS, der entnehmbar ist, dass eine bestimmte Art DS von Daten, beispielsweise ein bestimmter Dienst, zur Übertragung auf gemeinsam genutzten Übertragungskanälen an die Teilnehmerstationen in der Funkzelle angeboten wird. Die Information IDS über die bestimmte Art DS von Daten kann selbstverständlich auch jeweils auf dedizierten Übertragungskanälen an die Teilnehmerstationen gesendet werden. Weiterhin sendet die Basisstation NodeB eine Information I, der entnehmbar ist, aus welcher Übertragungskanalklasse KL die Teilnehmerstationen einen gemeinsam genutzten Übertragungskanal zum Empfang der bestimmten Art DS von Daten auswählen können. Eine weitere Information IK gibt an, welche Übertragungskanäle K1, K2, K3, K4, K5 der in der Information I angegebenen Übertragungskanalklasse KL zur Auswahl gestellt werden. In diesem Ausführungsbeispiel steht eine Übertragungskanalklasse KL zur Auswahl und innerhalb dieser Übertragungskanalklasse KL werden fünf Übertragungskanäle K1, K2, K3, K4, K5 zur Auswahl angeboten. Die ganze Übertragungskanalklasse KL besteht beispielsweise sogar aus zehn Übertragungskanälen, von denen jedoch lediglich fünf zur Auswahl gestellt werden.

Eine bestimmte Art von Daten sind beispielsweise teilnehmerspezifische Nutzdaten und/oder Signalisierungsdaten oder ein bestimmter Dienst, beispielsweise ein Broadcast- und/oder Multicast-Dienst (MBMS: Multimedia Broadcast Multicast Service) oder auch fließend übertragene Bild- und Tondaten (engl.: streaming video).

Eine Übertragungskanalklasse wird charakterisiert durch Kanaleigenschaften der ihr zugeordneten Übertragungskanäle. Unter einer Kanaleigenschaft sind beispielsweise eine Datenrate und/oder eine Übertragungsqualität eines Übertragungskanals zu verstehen. Die in diesem Ausführungsbeispiel zu übertragende Art DS von Daten benötigt eine hohe Datenrate. Daher enthält die in der Information I angegebene Übertragungskanalklasse KL gemeinsam genutzte, in der weiteren Information IK angegebene Übertragungskanäle K1, K2, K3, K4, K5, die es den Teilnehmerstationen UE1, UE2, UE3, UE4 ermöglichen, die bestimmte Art DS von Daten mit einer hohen Datenrate zu empfangen. Eine Übertragungskanalklasse des Funkkommunikationssystems wird beispielsweise aus den bekannten Secondary Common Control Physical Channel (SCCPCH) gebildet, während eine weitere Übertragungskanalklasse, nämlich die in der Information I angegebene Übertragungskanalklasse KL durch verbesserte, als Enhanced Secondary Common Control Physical Channel (E-SCCPCH) bezeichnete, gemeinsam genutzte Übertragungskanäle gebildet wird.

Die vier Teilnehmerstationen UE1, UE2, UE3, UE4, werten die auf den Rundsendekanal BCCH empfangenen Informationen I, IK, IDS aus, entscheiden sich für den Empfang einer bestimmten Art DS von Daten und signalisieren dies der Basisstation NodeB. Alternativ können die Teilnehmerstationen UE1, UE2, UE3, UE4 auch von der Basisstation NodeB oder einer Netzeinrichtung, beispielsweise einem Funknetzkontroller (RNC: Radio Network Controller), des Funkkommunikationssystems durch eine entsprechende Signalisierung auf einem dedizierten Übertragungskanal oder auf dem Rundsendekanal BCCH zum Empfang der bestimmten Art DS von Daten aufgefordert werden.

Jede der vier Teilnehmerstationen UE1, UE2, UE3, UE4 wählt in Abhängigkeit von einer für jede Teilnehmerstation UE1, UE2, UE3, UE4 spezifischen Teilnehmerkennung, beispielsweise der UTRAN-RNTI, einen der Übertragungskanäle aus der Übertragungskanalklasse KL aus. Da in diesem Ausführungsbeispiel alle vier Teilnehmerstationen UE1, UE2, UE3, UE4 unterschiedliche Teilnehmerkennungen haben, unterscheiden sich alle ausgewählten Übertragungskanäle K1, K2, K3, K4. Die erste Teilnehmerstation UE1 wählt den ersten Übertragungskanal K1, die zweite Teilnehmerstation UE2 wählt den zweiten Übertragungskanal K2, die dritte Teilnehmerstation UE3 wählt den dritten Übertragungskanal K3 und die vierte Teilnehmerstation UE4 wählt den vierten Übertragungskanal K4 aus. Der Basisstation NodeB und/oder der Netzeinrichtung des Funkkommunikationssystems sind die Teilnehmerkennungen der Teilnehmerstationen UE1, UE2, UE3, UE4 bekannt. Für die Basisstation NodeB erfolgt daher mittels der jeweiligen Teilnehmerkennung eine Auswahl des gleichen Übertragungskanals K1, K2, K3, K4, den auch die entsprechende Teilnehmerstation UE1, UE2, UE3, UE4 ausgewählt hat. Auf den ausgewählten Übertragungskanälen K1, K2, K3, K4 überträgt die Basisstation NodeB die bestimmte Art DS von Daten an die Teilnehmerstationen UE1, UE2, UE3, UE4. Selbstverständlich können die ausgewählten Übertragungskanäle K1, K2, K3, K4 auch so aufgebaut sein, dass die Teilnehmerstationen UE1, UE2, UE3, UE4 auf den ausgewählten Übertragungskanälen K1, K2, K3, K4 auch Daten an die Basisstation NodeB übertragen.

Zur Auswahl eines Übertragungskanals aus der Übertragungskanalklasse KL kann beispielsweise das in der technischen Dokumentation TS25.331, Kapitel 8.5.19 der 3GPP, beschriebene Auswahlverfahren verwendet werden. Dabei ist es selbstverständlich auch möglich, dass Teilnehmerstationen trotz unterschiedlicher Teilnehmerkennung den gleichen Übertragungskanal auswählen und auf dem gleichen Übertragungskanal die bestimmte Art DS von Daten von der Basisstation NodeB empfangen, sofern es sich um die gleichen Daten handelt. Dies ist beispielsweise dann der Fall, wenn mehrere Teilnehmerstationen das gleiche Video empfangen wollen. Wird zwar die gleiche Art von Daten empfangen, aber die empfangenen Daten sind je nach Teilnehmerstation unterschiedlich, beispielsweise teilnehmerspezifische Signalisierungsdaten, so erfolgt die gemeinsame Nutzung des Übertragungskanals durch zeitliche Trennung der Übertragungen.

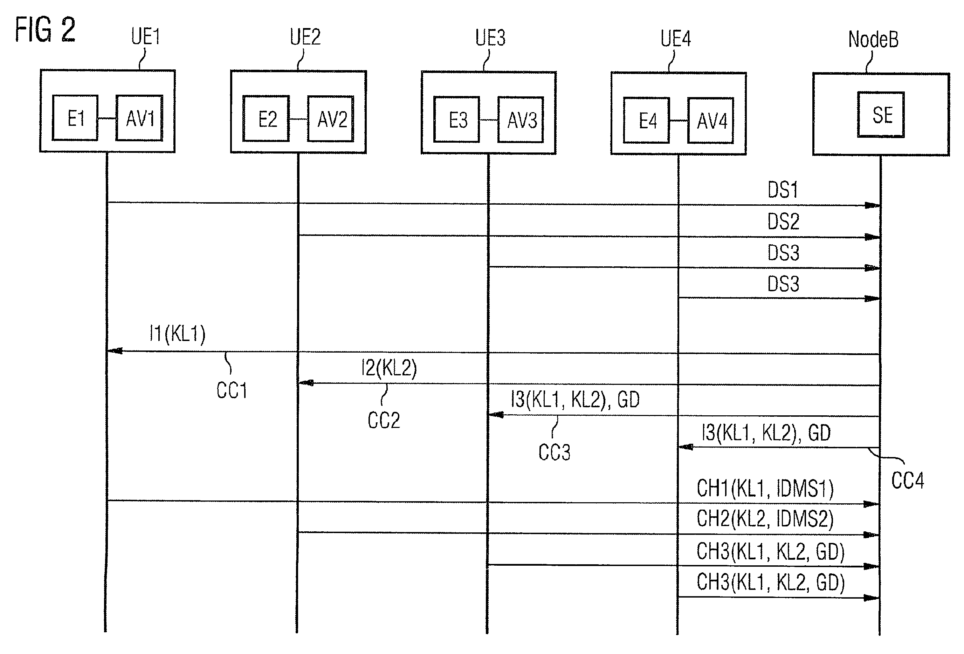

In Figur 2 ist schematisch ein weiteres Ausführungsbeispiel für die Auswahl eines gemeinsam genutzten Übertragungskanals für die vier Teilnehmerstationen UE1, UE2, UE3, UE4 aus Figur 1 dargestellt. Die vier Teilnehmerstationen UE1, UE2, UE3, UE4 verfügen jeweils über eine Empfangseinheit E1, E2, E3, E4 zum Empfang von Informationen I1, I2, I3 von der Basisstation NodeB und eine Auswahlvorrichtung AV1, AV2, AV3, AV4 zum Auswerten der empfangenen Informationen I1, I2, I3 und zur Auswahl eines Übertragungskanals CH1, CH2, CH3 anhand der empfangenen Informationen I1, I2, I3.

Die Teilnehmerstationen UE1, UE2, UE3, UE4 haben auf dem Rundsendekanal BCCH der Basisstation NodeB eine Information empfangen, der entnehmbar ist, dass drei bestimmte Arten DS1, DS2, DS3, von Daten von der Basisstation NodeB übertragen werden können. Die erste Teilnehmerstation UE1 signalisiert der Basisstation NodeB daher, dass sie die erste bestimmte Art DS1 von Daten empfangen möchte. Die zweite Teilnehmerstation UE2 signalisiert der Basisstation NodeB entsprechend, dass sie die zweite bestimmte Art DS2 von Daten empfangen möchte. Die dritte und die vierte Teilnehmerstation U3, U4 möchten beide die dritte bestimmte Art DS3 von Daten empfangen und signalisieren dies jeweils der Basisstation NodeB.

Die mit einer Sende- und Empfangseinheit SE ausgestattete Basisstation NodeB erkennt, dass die erste Teilnehmerstation UE1 aufgrund ihrer technischen Ausführung lediglich gemeinsam genutzte Übertragungskanäle empfangen kann, die zu einer ersten Übertragungskanalklasse KL1 gehören. Sie signalisiert der ersten Teilnehmerstation UE1 daher auf einem ersten dedizierten Übertragungskanal CC1 mit einer ersten Information I1, dass die erste Teilnehmerstation UE1 einen Übertragungskanal aus der ersten Übertragungskanalklasse KL1 auswählen muss. Beispielsweise handelt es sich bei der ersten Teilnehmerstation UE1 um eine Teilnehmerstation älterer Bauart, die ausschließlich die oben bereits genannten SCCPCH Übertragungskanäle empfangen kann. Die erste Übertragungskanalklasse KL1 entspricht in diesem Fall den bekannten SCCPCH-Übertragungskanälen.

Die Basisstation NodeB erkennt weiterhin beispielsweise an einer Teilnehmerkennung der zweiten Teilnehmerstation UE2, dass die zweite Teilnehmerstation UE2 neuer Bauart ist und somit auch auf Übertragungskanälen von Übertragungskanalklassen empfangen kann, die der ersten Teilnehmerstation UE1 nicht zur Verfügung stehen. Insbesondere ist die zweite Teilnehmerstation UE2 derart ausgebildet, dass sie Übertragungskanäle einer zweiten Übertragungskanalklasse KL2 empfangen kann. Die zweite Übertragungskanalklasse KL2 zeichnet sich beispielsweise dadurch aus, dass ihre Übertragungskanäle eine höhere Datenrate ermöglichen, als dies beispielsweise mit den SCCPCH-Übertragungskanälen möglich ist. Diese Übertragungskanäle sind beispielsweise die oben genannten E-SCCPCH Übertragungskanäle. Da es sich bei der zweiten bestimmten Art DS2 von Daten um Videodaten handelt, die eine hohe Datenrate erfordern, signalisiert die Basisstation NodeB der zweiten Teilnehmerstation UE2 auf einem zweiten dedizierten Übertragungskanal CC2 durch eine zweite Information I2, dass die zweite Teilnehmerstation UE2 einen Übertragungskanal aus der zweiten Übertragungskanalklasse KL2 auswählen soll, da nur die zweite Übertragungskanalklasse KL2 die erforderliche Datenrate ermöglicht.

Die Auswahl eines Übertragungskanals aus der ersten oder der zweiten Übertragungskanalklasse KL1, KL2 kann beispielsweise in gleicher Weise erfolgen, wie dies für die SCCPCH-Übertragungskanäle in der technischen Dokumentation TS25.331, Kapitel 8.5.19 beschrieben wird.

Bei der dritten und vierten Teilnehmerstation UE3, UE4 handelt es sich ebenfalls um Teilnehmerstationen neuerer Bauart, die selbstverständlich sowohl Übertragungskanäle der ersten als auch Übertragungskanäle der zweiten Übertragungskanalklasse KL1, KL2 empfangen können. Dies erkennt die Basisstation NodeB beispielsweise an Teilnehmerkennungen der dritten und vierten Teilnehmerstationen UE3, UE4 oder an einer entsprechenden Information, die beispielsweise jeweils bei einem Verbindungsaufbau der Teilnehmerstationen UE3, UE4 oder mit Anforderung der dritten bestimmten Art DS3 von Daten übertragen wurde.

Bei der dritten bestimmten Art DS3 von Daten handelt es sich beispielsweise um einen MBMS-Dienst. Der MBMS-Dienst kann auf einem einzigen Übertragungskanal gleichzeitig an mehrere Teilnehmerstationen der Funkzelle der Basisstation NodeB übertragen werden, da es sich um die gleichen Daten handelt, die von allen den MBMS-Dienst empfangenden Teilnehmerstationen benötigt werden. In diesem Ausführungsbeispiel stellt der MBMS-Dienst keine besonderen Anforderungen an die Datenrate und kann daher sowohl auf Übertragungskanälen der ersten Übertragungskanalklasse KL1 als auch auf Übertragungskanälen der zweiten Übertragungskanalklasse KL2 übertragen werden. Die Basisstation NodeB signalisiert daher der dritten und der vierten Teilnehmerstation UE3, UE4 jeweils auf einem dedizierten Übertragungskanal CC3, CC4 mit einer dritten Information I3, dass die beiden Teilnehmerstationen UE3, UE4 jeweils einen Übertragungskanal aus einer Menge von Übertragungskanälen auswählen sollen, die aus den Übertragungskanälen der ersten und der zweiten Übertragungskanalklasse KL1, KL2 gebildet wird. Damit beide Teilnehmerstationen UE3, UE4 den gleichen Übertragungskanal CH3 auswählen und der MBMS-Dienst somit über einen einzigen Übertragungskanal CH3 übertragen werden kann, wird den Teilnehmerstationen UE3, UE4 von der Basisstation NodeB zusammen mit der dritten Information I3 eine Gruppenkennung GD übermittelt, anhand derer die beiden Teilnehmerstationen UE3, UE4 jeweils den gleichen Übertragungskanal CH3 auswählen. Hierzu wird beispielsweise in dem bereits beschriebenen Verfahren aus der technischen Dokumentation TS25.331, Kapitel 8.5.19, anstelle einer Teilnehmerkennung die Gruppenkennung GD zur Auswahl des Übertragungskanals verwendet. Dies führt dazu, dass beide Teilnehmerstationen UE3, UE4 den gleichen Übertragungskanal CH3 auswählen.

Die Teilnehmerstationen UE1, UE2, UE3, UE4 werten jeweils die von der Basisstation NodeB empfangene Information I1, I2, I3 aus und bauen jeweils auf dem ausgewählten Übertragungskanal CH1, CH2, CH3 eine Verbindung mit der Basisstation NodeB auf. Die erste Teilnehmerstation UE1 wählt wie beschrieben basierend auf ihrer Teilnehmerkennung IDMS1 einen ersten Übertragungskanal CH1 aus der ersten Übertragungskanalklasse KL1 aus. Die zweite Teilnehmerstation UE2 wählt anhand ihrer Teilnehmerkennung IDMS2 einen zweiten Übertragungskanal CH2 aus der zweiten Übertragungskanalklasse KL2 aus und die dritte bzw. vierte Teilnehmerstation UE3, UE4 wählen jeweils einen dritten Übertragungskanal CH3 aus der Menge der Übertragungskanäle der ersten und der zweiten Übertragungskanalklasse KL1, KL2 aus, wobei sie dabei jeweils die Gruppenkennung GD verwenden.

In der ersten, zweiten und dritten Information I1, I2, I3 ist jeweils eine Information enthalten, aus der die jeweilige Teilnehmerstation UE1, UE2, UE3, UE4 entnimmt, welche Übertragungskanäle aus der entsprechenden Übertragungskanalklasse tatsächlich für das Auswahlverfahren zur Verfügung stehen. Dabei kann es sich sowohl um alle Übertragungskanäle der jeweiligen Übertragungskanalklasse als auch um eine Untermenge der entsprechenden Übertragungskanäle der Übertragungskanalklasse handeln. Die Information, welche Übertragungskanäle einer Übertragungskanalklasse zur Auswahl stehen, kann selbstverständlich auch in Form einer weiteren Information separat von der ersten, zweiten oder dritten Information I1, I2, I3 auf den entsprechenden dedizierten Übertragungskanälen CC1, CC2, CC3, CC4 an die entsprechende Teilnehmerstation UE1, UE2, UE3, UE4 gesendet werden.

Die Entscheidung, welche Übertragungskanalklasse KL1, KL2 eine Teilnehmerstation UE1, UE2, UE3, UE4 für den Empfang einer bestimmten Art von Daten verwenden soll, kann die Basisstation Node B davon abhängig machen, welche Übertragungskanalklassen eine Teilnehmerstation aufgrund ihrer technischen Ausführungen empfangen kann und/oder sie kann die Übertragungskanalklasse in Abhängigkeit davon wählen, welche Art von Daten von der entsprechenden Teilnehmerstation empfangen werden sollen. Werden beispielsweise Übertragungskanalklassen anhand der verwendeten Datenrate und/oder anhand der Übertragungsqualität unterschieden, so wird die Basisstation NodeB für Dienste die eine hohe Datenrate und/oder eine sehr gute Übertragungsqualität erfordern, eine entsprechende Übertragungskanalklasse an eine Teilnehmerstation signalisieren, sofern diese Teilnehmerstation technisch in der Lage ist, die Übertragungskanalklasse zu empfangen. Ist es für eine bestimmte Art von Daten unwesentlich, auf welche Art von Übertragungskanal, d. h. in welcher Übertragungskanalklasse, sie übertragen werden, so kann für diese bestimmte Art von Daten, wie am Beispiel der dritten und vierten Teilnehmerstation UE3, UE4 bereits beschrieben wurde, ein Übertragungskanal aus allen zur Verfügung stehenden Übertragungskanalklassen ausgewählt werden. Dies hat insbesondere im Fall einer sehr großen Anzahl von Teilnehmerstationen, die von der Basisstation NodeB die bestimmte Art von Daten anfordern oder zum Empfang aufgefordert wurden, den Vorteil, dass eine möglichst große Anzahl von Übertragungskanälen zur Auswahl steht. Dies ist besonders dann von Bedeutung, wenn eine Vielzahl der Teilnehmerstationen gleichzeitig jeweils einen gemeinsam genutzten Übertragungskanal benötigt. Dieser Fall tritt beispielsweise dann ein, wenn die Vielzahl der Teilnehmerstationen gleichzeitig unterschiedliche Daten der bestimmten Art von Daten empfangen soll.

Die Teilnehmerstationen UE1, UE2, UE3, UE4 können in einem nicht dargestellten Ausführungsbeispiel selbstverständlich auch von der Basisstation NodeB zum Empfang der drei bestimmten Arten DS1, DS2, DS3 von Daten explizit auf dem Rundsendekanal BCCH oder jeweils einem dedizierten Übertragungskanal aufgefordert werden. Der Ablauf zur jeweiligen Auswahl eines Übertragungskanals erfolgt nach der jeweiligen Aufforderung in gleicher Weise, wie dies bereits für das Ausführungsbeispiel von Figur 2 beschrieben wurde.

## Patentansprüche

1. Verfahren zur Auswahl eines gemeinsam genutzten Übertragungskanals (K1, K2, K3, K4; CH1, CH2, CH3) für eine Teilnehmerstation (UE1, UE2, UE3, UE4) eines Funkkommunikationssystems, **dadurch gekennzeichnet, dass**
- im Funkkommunikationssystem zur Übertragung von mindestens einer bestimmten Art (DS; DS1, DS2, DS3) von Daten gemeinsam genutzte Übertragungskanäle aus mehreren Übertragungskanalklassen (KL; KL1, KL2, KL3) zur Verfügung stehen,
- die Teilnehmerstation eine Information (I; I1, I2, I3) von einer sendenden Station (NodeB) empfängt, die angibt, welche der Übertragungskanalklassen (KL; KL1, KL2, KL3) für die Übertragung der bestimmten Art (DS; DS1, DS2, DS3) von Daten zur Auswahl gestellt werden, und
- die Teilnehmerstation (UE1, UE2, UE3, UE4) aus den Übertragungskanälen der zur Auswahl gestellten Übertragungskanalklassen (KL; KL1, KL2, KL3) einen Übertragungskanal (K1, K2, K3, K4; CH1, CH2, CH3)auswählt.

2. Verfahren nach Anspruch 1, bei dem der Übertragungskanal (CH1, CH2, CH3)
- bei Empfang einer ersten Information (I1) aus einer ersten Übertragungskanalklasse (KL1) ausgewählt wird,
- bei Empfang einer zweiten Information (I2) aus einer zweiten Übertragungskanalklasse (KL2) ausgewählt wird und
- bei Empfang einer dritten Information (I3) aus einer Menge von Übertragungskanälen ausgewählt wird, die durch Übertragungskanäle der ersten und der zweiten Übertragungskanalklasse (KL1, KL2) gebildet wird.

3. Verfahren nach einem der vorstehenden Ansprüche, bei dem die Information (I; I1, I2, I3) ausschließlich Übertragungskanalklassen (KL; KL1, KL2, KL3) angibt, die die Teilnehmerstation (UE1, UE2, UE3, UE4) aufgrund ihrer technischen Ausgestaltung verwenden kann.

4. Verfahren nach einem der vorstehenden Ansprüche, bei dem die Information (I; I1, I2, I3) über einen dedizierten Übertragungskanal (CC1, CC2, CC3, CC4) oder einen Rundsendekanal (BCCH) empfangen wird.

5. Verfahren nach einem der vorstehenden Ansprüche, bei dem eine weitere Information (IK) über einen dedizierten Übertragungskanal (CC1, CC2, CC3, CC4) oder einen Rundsendekanal (BCCH) empfangen wird, die angibt welche Übertragungskanäle in der jeweiligen Übertragungskanalklasse (KL; KL1, KL2, KL3) zur Auswahl gestellt werden.

6. Verfahren nach einem der vorstehenden Ansprüche, bei dem die Teilnehmerstation (UE3, UE4) den Übertragungskanal (CH3) anhand einer für eine Gruppe von Teilnehmerstationen spezifischen Gruppenkennung (GD) auswählt.

7. Verfahren nach einem der Ansprüche 1 bis 5, bei dem
die Teilnehmerstation (UE1, UE2) den Übertragungskanal (CH1, CH2)anhand einer für die Teilnehmerstation spezifischen Teilnehmerkennung (IDUE1, IDUE2) auswählt.

8. Verfahren nach einem der vorstehenden Ansprüche, bei dem die Übertragungskanalklassen (KL; KL1, KL2, KL3) sich durch eine Kanaleigenschaft der ihnen zugeordneten Übertragungskanäle unterscheiden.

9. Verfahren nach Anspruch 8, bei dem
als Kanaleigenschaft eine Datenrate verwendet wird.

10. Verfahren nach Anspruch 8 oder 9, bei dem
als Kanaleigenschaft eine Übertragungsqualität verwendet wird.

11. Teilnehmerstation (UE1, UE2, UE3, UE4) für ein Funkkommunikationssystem, **dadurch gekennzeichnet, dass** im Funkkommunikationssystem zur Übertragung von mindestens einer bestimmten Art (DS; DS1, DS2, DS3) von Daten gemeinsam genutzte Übertragungskanäle aus mehreren Übertragungskanalklassen (KL; KL1, KL2, KL3) zur Verfügung stehen,
- mit einer Empfangseinheit (E1, E2, E3, E4) zum Empfang einer Information (I, I1, I2, I3) von einer sendenden Station (NodeB) , die angibt, welche der Übertragungskanalklassen (KL; KL1, KL2, KL3) für die Übertragung der bestimmten Art (DS; DS1, DS2, DS3) von Daten zur Auswahl gestellt werden, und
- mit einer Auswahlvorrichtung (AV1, AV2, AV3, AV4) zum Auswählen eines Übertragungskanals (K1, K2, K3, K4; CH1, CH2, CH3) aus den Übertragungskanälen der zur Auswahl gestellten Übertragungskanalklassen (KL; KL1, KL2, KL3).

12. Sendende Station (NodeB) für ein Funkkommunikationssystem, **dadurch gekennzeichnet, dass** im Funkkommunikationssystem zur Übertragung von mindestens einer bestimmten Art (DS; DS1, DS2, DS3) von Daten gemeinsam genutzte Übertragungskanäle aus mehreren Übertragungskanalklassen (KL; KL1, KL2, KL3) zur Verfügung stehen, mit einer Sendeeinheit (SE) zum Senden einer Information (I, I1, I2, I3) an eine Teilnehmerstation (UE1, UE2, UE3, UE4), die angibt, welche der Übertragungskanalklassen (KL; KL1, KL2, KL3) der Teilnehmerstation (UE1, UE2, UE3, UE4) für die Übertragung der bestimmten Art (DS; DS1, DS2, DS3) von Daten zur Auswahl gestellt werden.

13. Computerprogramm zur Auswahl eines gemeinsam genutzten Übertragungskanals für eine Teilnehmerstation (UE1, UE2, UE3, UE4) eines Funkkommunikationssystems, **dadurch gekennzeichnet, dass** im Funkkommunikationssystem zur Übertragung von mindestens einer bestimmten Art (DS; DS1, DS2, DS3) von Daten Übertragungskanäle aus mehreren Übertragungskanalklassen (KL; KL1, KL2, KL3) zur Verfügung stehen,
das bei seiner Ausführung
- eine Information (I; I1, I2, I3) verwendet, die angibt, welche der Übertragungskanalklassen (KL; KL1, KL2, KL3) für die Übertragung der bestimmten Art (DS; DS1, DS2, DS3) von Daten zur Auswahl gestellt werden, und
- aus den Übertragungskanälen der zur Auswahl gestellten Übertragungskanalklassen (KL; KL1, KL2, KL3) einen Übertragungskanal für die Teilnehmerstation (UE1, UE2, UE3, UE4) auswählt.

## Claims

1. Method for selecting a common transmission channel (K1, K2, K3, K4; CH1, CH2, CH3) for a subscriber station (UE1, UE2, UE3, UE4) of a radio communication system,
**characterised in that**
- in the radio communication system, common transmission channels of several transmission classes (KL; KL1, KL2, KL3) are available for the transmission of at least one specific type (DS; DS1, DS2, DS3) of data,
- the subscriber station receives information (I; I1, I2, I3) from a transmitting station (NodeB) that indicates which of the transmission channel classes (KL; KL1, KL2, KL3) is provided for selection for transmission of the specific type (DS; DS1, DS2,DS3) of data, and
- the subscriber station (UE1, UE2, UE3, UE4) selects a transmission channel (K1 K2, K3, K4; CH1, CH2, CH3) from the transmission channels of the transmission channel classes (KL; KL1, KL2, KL3) provided for selection.

2. Method according to claim 1, with in the case of the transmission channel (CH1, CH2, CH3),
- a selection being made from a first transmission channel class (KL1) on the receipt of a first information (I1),
- a selection being made from a second transmission channel class (KL2) on receipt of a second information (I2) and
- a selection being made from a set of transmission channels formed by the transmission channels of the first and second transmission channel classes (KL1, KL2) on receipt of a third information (I3).

3. Method according to one of the above claims, with the information (I; I1, I2, I3) exclusively indicating transmission channel classes (KL; KL1, KL2, KL3) that the user station (UE1, UE2, UE3, UE4) can use because of its technical equipment.

4. Method according to one of the preceding claims, with the information (I; I1, I2, I3) being received via a dedicated transmission channel (CC1, CC2, CC3, CC4) or a broadcast channel (BCCH).

5. Method according to one of the preceding claims, with further information (IK) being received via a dedicated transmission channel (CC1, CC2, CC3, CC4) or a broadcast channel (BCCH) that indicates which transmission channels are provided for selection in the respective transmission channel class (KL; KL1, KL2, KL3).

6. Method according to one of the preceding claims, with the subscriber station (UE3, UE4) selecting the transmission channel (CH3) using a group identifier (GD) specific to a group of subscriber stations.

7. Method according to one of claims 1 to 5, with the subscriber station (UE1, UE2) selecting the transmission channel (CH1, CH2) on the basis of a subscriber identifier (IDUE1, IDUE2) specific to the subscriber station.

8. Method according to one of the preceding claims, with the transmission channel classes (KL; KL1, KL2, KL3) differing from each other by a channel characteristic of the transmission channels assigned to them.

9. Method according to claim 8, with a data rate being used as a channel characteristic.

10. A method according to claim 8 or 9, with the transmission quality being used as a channel characteristic.

11. Subscriber station (UE1, UE2 UE3, UE4) for a radio communication system, **characterised in that** to transmit at least a specific type (DS; DS1, DS2, DS3) of data, common transmission channels from several transmission channel classes (KL; KL1, KL2, KL3) are available in the radio communication system,
- with a receiving unit (E1, E2, E3, E4) for receiving information (I, I1, I2 , I3) from a transmitting station (NodeB) that indicates which of the transmission classes (KL; KL1, KL2, KL3) is provided for selection for the transmission of the specific type (D; DS1, DS2, DS3) of data, and
- with a selector device (AV1, AV2, AV3, AV4) for selecting a transmission channel (K1, K2, K3, K4; CH1, CH2, CH3) from the transmission channels of the transmission channel classes (KL; KL1, KL2, KL3) provided for selection.

12. Transmitting station (NodeB) for a radio communication system, **characterised in that** common transmission channels from several transmission channel classes (KL; KL1, KL2, KL3) are available in the radio communication system for the transmission of at least one specific type (DS; DS1, DS2, DS3) of data, with a transmission unit (SE) for transmitting information (I, I1, I2, I3) to a subscriber station (UE1, UE2, UE3, UE4) that indicates which of the transmission channel classes (KL; KL1, KL2, KL3) is provided for selection to the subscriber station (UE1, UE2, UE3, UE4) for the transmission of the specific type (DS; DS1, DS2, DS3) of data.

13. Computer program for selecting a common transmission channel for a subscriber station (UE1, UE2, UE3, UE4) of a radio communication system, **characterised in that** in the radio communication system transmission channels from several transmission channel classes (KL; KL1, KL2, KL3) are available for the transmission of at least one specific type (DS; DS1, DS2, DS3) of data,
that during its execution
- uses information (I; I1, I2, I3) that indicates which of the transmission channel classes (KL; KL1, KL2, KL3) is provided for selection for the transmission of the specific type (DS; DS1, DS2, DS3) of data, and
- which selects a transmission channel for the subscriber station (UE1, UE2, UE3, UE4) from the transmission channels of the transmission channel classes (KL, KL1, KL2, KL3) provided for selection.

## Revendications

1. Procédé pour le choix d'un canal de transmission (K1, K2, K3, K4 ; CH1, CH2, CH3) utilisé en commun pour une station d'abonné (UE1, UE2, UE3, UE4) d'un système de radiocommunication, **caractérisé en ce que**
- des canaux de transmission de plusieurs classes de canal de transmission (KL ; KL1, KL2 ; KL3) utilisés en commun sont disponibles dans le système de radiocommunication pour la transmission d'au moins un type défini (DS ; DS1, DS2, DS3) de données,
- la station d'abonné reçoit une information (I ; I1 I2, I3) d'une station émettrice (NodeB), qui indique lesquelles des classes de canal de transmission (KL ; KL1, KL2, KL3) sont proposées au choix pour la transmission du type défini (DS ; DS1, DS2, DS3) de données, et
- la station d'abonné (UE1, UE2, UE3, UE4) sélectionne un canal de transmission (K1, K2, K3, K4 ; CH1, CH2, CH3) parmi les canaux de transmission des classes de canal de transmission (KL ; KL1, KL2, KL3) proposées au choix.

2. Procédé selon la revendication 1, dans lequel le canal de transmission (CH1, CH2, CH3)
- est choisi en cas de réception d'une première information (I1) à partir d'une première classe de canal de transmission (KL1),
- est sélectionné en cas de réception d'une seconde information (I2) à partir d'une seconde classe de canal de transmission (KL2) et
- est sélectionné en cas de réception d'une troisième information (I3) provenant d'un ensemble de canaux de transmission qui est formé par des canaux de transmission de la première et de la seconde classes de canal de transmission (KL1, KL2).

3. Procédé selon l'une quelconque des revendications précédentes, dans lequel l'information (I ; I1 I2, I3) indique exclusivement des classes de canal de transmission (KL ; KL1, KL2, KL3) que la station d'abonné (UE1, UE2, UE3, UE4) peut utiliser de fait de sa conception technique.

4. Procédé selon l'une quelconque des revendications précédentes, dans lequel l'information (I ; I1, I2, I3) est reçue par un canal de transmission (CC1, CC2, CC3, CC4) dédié ou un canal de diffusion (BCCH).

5. Procédé selon l'une quelconque des revendications précédentes, dans lequel une autre information (IK) est reçue par un canal de transmission (CC1, CC2, CC3, CC4) dédié ou un canal de diffusion (BCCH), qui indique quels canaux de transmission sont proposés au choix dans la classe de canal de transmission (KL ; KL1, KL2, KL3) respective.

6. Procédé selon l'une quelconque des revendications précédentes, dans lequel la station d'abonné (UE3, UE4) sélectionne le canal de transmission (CH3) à l'aide d'un code de groupe (GD) spécifique pour un groupe de stations d'abonné.

7. Procédé selon l'une quelconque des revendications 1 à 5, dans lequel la station d'abonné (UE1, UE2) sélectionne le canal de transmission (CH1, CH2) à l'aide d'un code d'abonné (IDUE1, IDUE2) spécifique pour la station d'abonné.

8. Procédé selon l'une quelconque des revendications précédentes, dans lequel les classes de canal de transmission (KL ; KL1, KL2, KL3) se différencient par une propriété de canal des canaux de transmission qui leur sont attribués.

9. Procédé selon la revendication 8, dans lequel un débit de données est utilisé comme propriété de canal.

10. Procédé selon la revendication 8 ou 9, dans lequel une qualité de transmission est utilisée comme propriété de canal.

11. Station d'abonné (UE1, UE2, UE3, UE4) pour un système de communication radio, **caractérisée en ce que** dans le système de radiocommunication, des canaux de transmission de plusieurs classes de canal de transmission (KL ; KL1, KL2, KL3) utilisés en commun sont disponibles pour la transmission d'au moins un type défini (DS ; DS1, DS2, DS3) de données comprenant
- une unité de réception (E1, E2, E3, E4) pour la réception d'une information (I, I1 I2, I3) d'une station émettrice (NodeB) qui indique lesquelles des classes de canal de transmission (KL ; KL1, KL2, KL3) sont proposées au choix pour la transmission du type défini (DS ; DS1, DS2, DS3) de données, et
- un dispositif de sélection (AV1, AV2, AV3, AV4) pour la sélection d'un canal de transmission (K1, K2, K3, K4 ; CH1, CH2, CH3) parmi les canaux de transmission des classes de canal de transmission proposées au choix (KL ; KL1, KL2, KL3).

12. Station émettrice (NodeB) pour un système de radiocommunication, **caractérisée en ce que**, dans le système de radiocommunication, des canaux de transmission de plusieurs classes de canal de transmission (KL ; KL1, KL2, KL3) utilisés en commun sont disponibles pour la transmission d'au moins un type défini (DS ; DS1, DS2, DS3) de données, comprenant une unité d'émission (SE) pour l'émission d'une information (I, I1, I2, I3) à une station d'abonné (UE1, UE2, UE3, UE4), qui indique lesquelles des classes de canal de transmission (KL ; KL1, KL2, KL3) sont proposées au choix à la station d'abonné (UE1, UE2, UE3, UE4) pour la transmission du type défini (DS ; DS1, DS2, DS3) de données.

13. Programme informatique pour la sélection d'un canal de transmission utilisé en commun pour une station d'abonné (UE1, UE2, UE3, UE4) d'un système de radiocommunication, **caractérisé en ce que**, dans le système de radiocommunication, des canaux de transmission de plusieurs classes de canal de transmission (KL ; KL1, KL2, KL3) sont disponibles pour la transmission d'au moins un type défini (DS ; DS1, DS2, DS3) de données, qui, lors de son exécution
- utilise une information (I ; I1, I2, I3) qui indique lesquelles des classes de canal de transmission (KL ; KL1, KL2, KL3) sont proposées au choix pour la transmission du type défini (DS ; DS1, DS2, DS3) de données, et
- sélectionne parmi les canaux de transmission des classes de canal de transmission (KL ; KL1, KL2, KL3) proposées au choix un canal de transmission pour la station d'abonné UE1, UE2, UE3, UE4).
